# FASCICULE DE BREVET EUROPEEN

(11) **EP 0 392 902 B1**
(45) Date de publication et mention de la délivrance du brevet: **16.06.1993**
(21) Numéro de dépôt: 90400943.8
(22) Date de dépôt: 06.04.1990
(51) Int. Cl.: B23Q 1/20, B05B 15/08

(54) **Procédé pour modifier les positions relatives d'une pluralité d'organes alignés et dispositif pour la mise en oeuvre de ce procédé**
Verfahren zum Modifizieren der relativen Lagen einer Mehrzahl von ausgerichteten Elementen und Vorrichtung zur Durchführung dieses Verfahrens
Method of modifying the relative positions of a plurality of aligned parts, and device for performing this method

(30) Priorité: 12.04.1989 FR 8904791
(43) Date de publication de la demande: 17.10.1990
(73) Titulaire: SAINT-GOBAIN VITRAGE INTERNATIONAL, 92400 Courbevoie (FR)
(72) Inventeur: Sauvinet, Vincent, F-75017 Paris (FR); Pichon, Michel, F-60270 Gouvieux (FR); Gérardin, Pascal, F-60200 Compiègne (FR)
(74) Mandataire: Luziau, Nelly

(56) Documents cités:
- EP-A- 0 249 742
- DE-A- 2 535 973

## Description

L'invention est relative à un procédé pour modifier les positions relatives d'une pluralité d'organes alignés suivant une première configuration de manière à les disposer, en ligne, suivant une deuxième configuration.

L'invention concerne aussi un dispositif pour la mise en oeuvre de ce procédé.

En particulier, l'invention concerne un procédé et un dispositif pour modifier automatiquement les positions relatives d'injecteurs (encore appelés tubes d'alimentation) de produits pulvérulents en suspension dans un gaz, dans une buse de distribution, en vue de leur projection sur un support sous-jacent en défilement, pour obtenir, sur ce support, une pellicule à propriétés particulières.

Il est connu, notamment par le brevet FR 2 427 141 et la demande de brevet européen A-125 153, de distribuer en continu sur un substrat en défilement, tel qu'un ruban de verre, des produits pulvérulents en suspension dans un gaz, à travers une fente de distribution disposée au-dessus du substrat et transversalement au sens de déplacement de ce dernier. Cette fente est constituée par l'extrémité inférieure d'un dispositif de distribution, appelé aussi buse, qui comprend une cavité s'étendant sur toute la longueur de la buse. Cette cavité est alimentée en produits pulvérulents en suspension dans un gaz par une série d'injecteurs alignés parallèlement à la fente.

Les procédés et dispositifs décrits dans ces brevets servent à former sur un substrat, par exemple sur un ruban de verre, une mince couche ayant des propriétés particulières, notamment optiques et/ou électriques. Pour obtenir des propriétés constantes appropriées sur toute la surface du substrat, il est nécessaire que la couche ne présente pas de variations d'épaisseur, sinon très faibles.

Malgré les brassages, turbulences du gaz porteur de produit pulvérulent, malgré l'introduction de gaz supplémentaire dans la buse pour régulariser la distribution de produit pulvérulent dans le temps et dans l'espace, on a remarqué qu'à la verticale de chacun des injecteurs de produit pulvérulent, correspond, sur le substrat, un dépôt, appelé trace, d'une certaine largeur et dont l'épaisseur, sur toute cette largeur peut ne pas être constante, l'épaisseur maximale se trouvant sensiblement dans l'axe de l'injecteur. L'ensemble de ces traces, par leur recouvrement au moins partiel, forme la couche déposée sur le substrat. Lorsque tous les injecteurs, alimentés en produit pulvérulent, sont convenablement espacés, le recouvrement des traces de chaque injecteur conduit à un dépôt homogène. Lorsque le dépôt n'est pas homogène, par suite d'une épaisseur trop grande ou trop petite dans une zone, on modifie l'écartement existant entre les injecteurs, ce qui a pour effet de modifier le recouvrement des traces. Ainsi, lorsque le revêtement est trop épais dans une zone, on écarte les injecteurs et lorsque l'épaisseur est insuffisante, on réduit l'écartement entre les injecteurs de façon a obtenir, sur l'ensemble du substrat, une épaisseur uniforme.

On contrôle l'uniformité du revêtement, et par conséquent celle de son épaisseur, en mesurant les variations de la réflexion de la lumière par le revêtement, en utilisant un appareil, appelé spotmètre. Cette mesure de la réflexion permet de déterminer les écarts d'épaisseur de la couche par rapport à une valeur d'épaisseur prédéterminée réglée initialement par le réglage du débit du produit pulvérulent. Si la mesure indique que l'épaisseur n'est pas conforme, on coupe alors l'arrivée de produit pulvérulent pour modifier les écarts entre les injecteurs en fonction du défaut observé, c'est-à-dire, comme on l'a déjà indiqué, en écartant ou en rapprochant les injecteurs suivant que l'épaisseur est trop grande ou trop petite.

Ce processus présente de nombreux inconvénients ; notamment, Les mesures par réflexion ont lieu hors ligne de fabrication sur une bande de verre transversale de 100 mm de large. Ces mesures ne peuvent donc être effectuées qu'après un certain temps après l'apparition des défauts dans le revêtement. En outre, l'exploitation de ces mesures demande un temps supplémentaire si bien que environ 30 mn se sont écoulés depuis la production du verre que l'on contrôle.

Si l'on tient compte du fait qu'il faut jusqu'à 30 mn pour régler les écarts entre les injecteurs et sachant que la vitesse de défilement du ruban de verre peut varier entre 6 et 25 m/mn, on peut se représenter la perte de production qui peut en résulter et qui correspond non seulement à la quantité de verre traitée avant la mesure optique, mais aussi à la surface de verre qui continue à être fabriquée pendant la période de réglage des écarts entre injecteurs. La capacité de production est ainsi limitée.

Il est donc d'une grande nécessité de trouver un système permettant un réglage rapide des écarts entre les injecteurs dès que les défauts ont été déterminés par la mesure optique.

L'invention a donc pour but un procédé, et un dispositif pour la mise en oeuvre de ce procédé, qui permettent de modifier rapidement, de préférence automatiquement, les positions relatives des injecteurs de produits pulvérulents qui servent à alimenter une buse de distribution en vue du dépôt de ces produits sur un substrat sous-jacent en défilement et aussi, plus généralement, de tout système comprenant une pluralité d'organes alignés suivant une première configuration, de manière à les disposer suivant une deuxième configuration en ligne.

Le procédé, selon l'invention, pour modifier Les positions relatives d'une pluralité d'organes alignés suivant une première configuration de manière à les disposer en ligne suivant une deuxième configuration consiste :
a) à coupler sélectivement au moins un desdits organes à une navette mobile parallèlement à l'alignement des organes,
b) à déplacer la navette et le ou les organes qui lui sont couplés d'une position initiale jusqu'à une position prédéterminée et,
c) à désaccoupler la navette du ou des organes après son ou leur installation à la position prédéterminée,
d) à répéter les étapes (a), (b) et (c) pour tous les organes à déplacer.

De préférence, on pilote par ordinateur le couplage des organes à la navette et le déplacement de cette dernière.

Le dispositif pour la mise en oeuvre du procédé de modification des positions relatives d'organes alignés, selon l'invention, est caractérisé en ce que lesdits organes sont montés mobiles sur un banc commun et en ce qu'il comprend au moins une navette mobile parallèlement à l'alignement des organes, des moyens pour coupler sélectivement la navette et au moins un desdits organes et des moyens pour déplacer la navette et le ou les organes qui lui sont couplés d'une position initiale jusqu'à une position prédéterminée.

Suivant un mode de réalisation, les organes sont associés chacun à un chariot monté mobile sur le banc qui est commun à tous les chariots.

Au dessin annexé, donné seulement à titre d'exemple :
- la figure 1 représente une vue en perspective d'un dispositif selon l'invention,
- la figure 2 représente une vue en coupe transversale de ce dispositif.

Sur ces figures, l'invention est illustrée dans une application, non limitative, au déplacement d'injecteurs, ou tubes d'alimentation, de poudre, alignés rectilignement dans une buse, telle que décrite au préambule de la présente description, d'une première à une deuxième configuration en ligne, qui se distinguent par l'écartement relatif d'au moins une partie des injecteurs alignés.

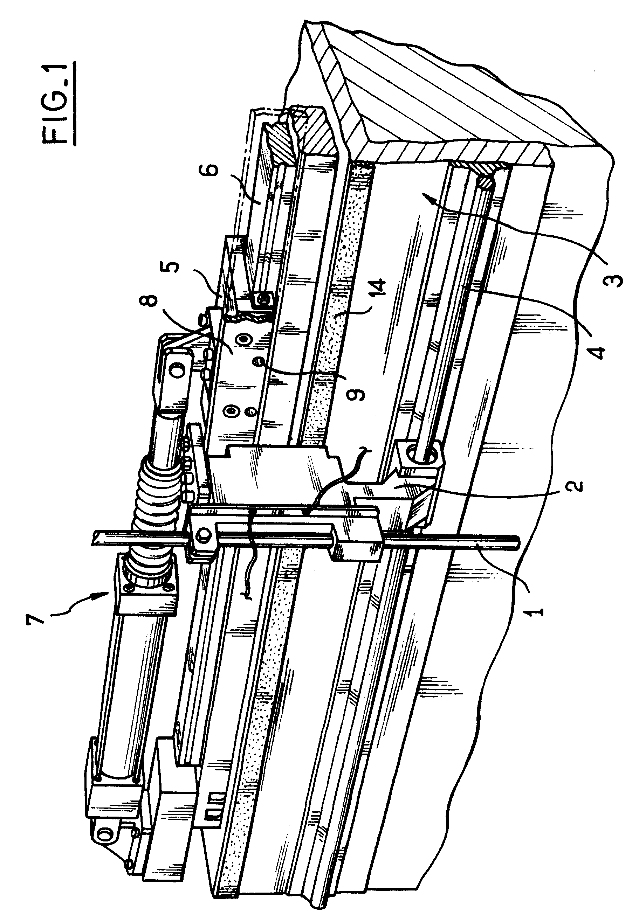

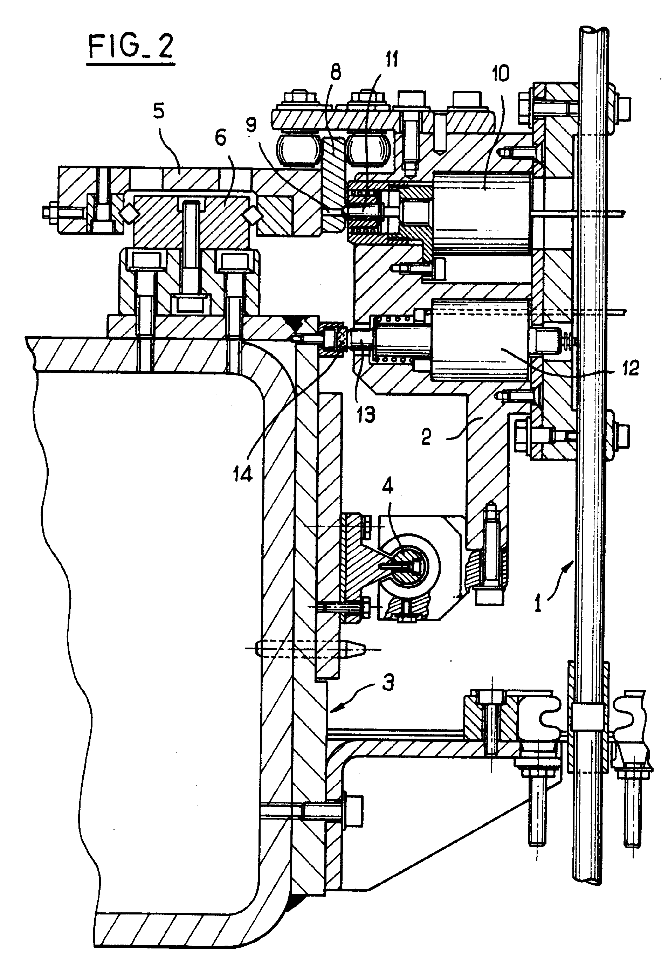

A la figure 1, on a représenté un injecteur (1) constituant l'un des organes à déplacer pour passer d'une configuration à l'autre. Il est clair que le dispositif comprend en fait plusieurs injecteurs, un seul de ceux-ci étant représenté à la figure 1 pour la clarté de la présente description. L'injecteur (1) est monté sur un chariot (2) mobile sur un rail (4) fixé sur un banc (3) rectiligne. Le banc (3) est commun à un groupe de chariots qui portent, chacun, un des injecteurs (1). Une navette (5) est mobile sur une glissière (6) fixée sur le banc (3) et ses déplacements sont assurés par un organe moteur 7, tel qu'un vérin par exemple. La navette (5) comprend une plaque (8) située dans un plan parallèle à la course du chariot. La plaque (8) de la navette (5) est munie d'une pluralité de logements (9) en alignement parallèle à la direction de la course du chariot. Ces logements (9) font face au noyau (11 - fig 2) d'un électro-aimant (10 - fig. 2) monté sur le chariot (2). Le noyau (11 - fig 2) est mobile entre une position rétractée, qui correspond à un non-couplage avec la navette, et une position débordante permettant à l'extrémité du noyau de pénétrer dans un des logements (9) de la plaque (8) de la navette en vue du déplacement transversal du chariot.

Le vérin (7) qui entraîne la navette en translation sur la glissière (6) peut être un vérin électrique commandé par un moteur pas à pas.

Avantageusement, le dispositif peut comprendre en outre des moyens de couplage à frottement entre le banc (3) et chacun des chariots (2) pour maintenir ce dernier dans une position fixe par rapport au banc (3) après son instaltion par la navette (5) dans une position prédéterminée. Ces moyens de couplage à frottement comprennent par exemple un deuxième électro-aimant (12 - fig 2) monté sur le chariot (2) et dont le noyau (13 - fig 2) est mobile entre une position rétractée, permettant le déplacement du chariot par la navette, et une position débordante dans laquelle il porte sur une plage rugueuse (14 - fig 1 et 2) du banc (3) pour assurer le couplage à frottement.

Afin d'automatiser la reconfiguration des positions relatives des différents organes alignés, les moyens de couplage des chariots à la navette, les moyens de couplage à frottement des chariots au banc et le vérin (7) de déplacement de la navette, sont commandés par un ordinateur convenablement programmé.

Ainsi, lors de la production, on prélève un échantillon de ruban de verre enduit, comme on l'a indiqué précédemment, en découpant une bande transversale relativement étroite dans ce ruban et on mesure la réflectance de cette bande sur toute sa longueur avec un appareil, tel un spotmètre à balayage.

Les mesures sont numérisées avec un convertisseur analogique - numérique et fournies à un ordinateur, tel qu'un ordinateur IBM-PC, chargé avec un logiciel d'exploitation de ces mesures pour en déduire d'éventuelles corrections de l'écartement des injecteurs, corrections qui sont commandées grâce à des signaux de commande appropriés au dispositif suivant l'invention pour réagencer les injecteurs suivant une deuxième configuration propre à faire disparaître les défauts d'uniformité détectés par le spotmètre.

Les mesures de réflectance sont faites de préférence directement sur le ruban de verre en mouvement pour éviter l'arrêt de la production.

En fonctionnement, le dispositif selon l'invention, assure ainsi sur la commande de l'ordinateur, le déplacement de la navette (5) de manière à mettre l'un des logements (9) de la plaque (8) en vis-à-vis du noyau (11) de l'électro-aimant (10) qui sert au couplage du chariot (2) à la navette. L'ordinateur commande l'excitation de cet électro-aimant (10) de telle sorte que l'extrémité du noyau (11) de l'électro-aimant (10) pénètre dans le logement (9) qui lui fait face, ce qui a pour effet de rendre solidaire le chariot (2) et la navette (5). Le deuxième électro-aimant (12), servant de moyen de couplage à frottement entre le banc (3) et le chariot (2), est alors commandé de manière à rétracter son noyau (13) et désaccoupler le chariot (2) du banc (3). Le chariot (2) est alors uniquement couplé à la navette (5). L'ordinateur commande le déplacement de cette dernière, sous l'action du vérin (7) d'une distance déterminée. La navette est avantageusement déplacée par pas élémentaire, par exemple de 0,25 mm. Lorsque le chariot occupe la position souhaitée, l'ordinateur commande le deuxième l'électro-aimant (12) de manière que son noyau occupe une position débordante lui permettant de porter sur la plage rugueuse (14) du banc (3) pour assurer l'immobilisation du chariot (2) sur ce banc (3).

L'électro-aimant (10) est alors commandé pour que son noyau (11) se rétracte et désaccouple le chariot (2) et la navette (5).

La navette (5) est alors de nouveau déplacée de manière à mettre l'un des logements (9) de la plaque (8) face à un autre chariot à déplacer. Le processus précédent se répète pour modifier Les positions des différents chariots et les placer suivant la nouvelle configuration souhaitée.

Eventuellement, la navette (5) peut être couplée simultanément à plusieurs chariots coopérant alors chacun avec l'un des logements (9) prévus dans la plaque (8) pour être déplacés simultanément.

Le procédé et le dispositif selon l'invention, décrits précédemment, sont particulièrement appropriés pour modifier automatiquement les positions d'injecteurs utiles pour l'alimentation en produits pulvérulents d'une buse de distribution, telle que décrite dans les brevets cités précédemment, en vue de la projection de ces produits sur un substrat sous-jacent en défilement, tel qu'un ruban de verre pour y former une couche de propriétés particulières. L'invention permet en effet un réglage rapide, et à distance, des écarts entre les injecteurs dès que le défaut d'homogénéité de la couche, mentionné précédemment, a été détecté. La durée qui s'écoule entre le moment de la détection des défauts dans la couche et celui où la pulvérisation peut être reprise après le réglage des écarts des injecteurs peut être réduite à 30 mn par exemple. L'invention présente donc l'avantage notamment de rendre plus aisée les interventions sur la chaîne de fabrication, de réduire la durée de ces interventions ainsi que la perte de production.

Le procédé et le dispositif selon l'invention peuvent être utilisables évidemment dans tout système comprenant des organes alignés dont les positions relatives doivent être modifiées.

## Revendications

1. Procédé pour modifier les positions relatives d'une pluralité d'organes (1) alignés suivant une première configuration notamment d'injecteurs de produits pulvérulents alignés dans une buse de distribution en vue de la formation d'une couche sur un support sous-jacent en défilement, de manière à les disposer en ligne suivant une deuxième configuration, caractérisé en ce que :
a) on couple sélectivement au moins un desdits organes (1) à une navette mobile (5) parallèlement à l'alignement des organes,
b) on déplace la navette (5) et le ou les organes (1) qui lui sont couplés d'une position initiale jusqu'à une position prédéterminée, et
c) on désaccouple la navette (5) du ou des organes (1) après son ou leur installation à la position prédéterminée,
d) on répète les étapes a), b) et c) pour tous les organes (1) à déplacer.

2. Procédé conforme à la revendication 1, caractérisé en ce qu'on pilote par ordinateur le couplage d'au moins un organe à la navette (5) ainsi que le déplacement de cette dernière.

3. Procédé conforme à l'une des revendications 1 ou 2, caractérisé en ce qu'on déplace la navette (5) par pas élémentaire.

4. Dispositif pour modifier les positions relatives d'une pluralité d'organes (1) alignés suivant une première configuration de manière à les disposer en ligne, suivant une deuxième configuration, caractérisé en ce que lesdits organes (1) sont montés mobiles sur un banc (3) commun et en ce qu'il comprend au moins une navette (5) mobile parallèlement à l'alignement des organes, des moyens pour coupler sélectivement la navette et au moins un desdits organes et des moyens (7) pour déplacer la navette et le ou les organes qui lui sont couplés jusqu'à une position prédéterminée.

5. Dispositif conforme à la revendication 4, caractérisé en ce que les organes sont associées chacun à un chariot (2) monté mobile sur le banc (3) commun à tous les chariots (2).

6. Dispositif conforme à la revendication 5, caractérisé en ce que les moyens pour coupler sélectivement la navette et au moins un desdits chariots comprennent un électro-aimant (10) monté sur le chariot (2), le noyau (11) de l'électro-aimant étant mobile entre une position rétractée correspondant à un non-couplage avec la navette et une position débordante correspondant au couplage avec la navette.

7. Dispositif conforme à la revendication 6, caractérisé en ce que la navette (5) comprend une plaque (8) qui est disposée parallèlement à la course des chariots, au niveau de l'électro-aimant (10) de couplage du chariot à la navette, et qui est munie d'une pluralité de logements (9) qui forment un alignement parallèle à la course du chariot et qui coopèrent sélectivement avec l'extrémité du noyau (11) de l'électro-aimant (10) d'un chariot pour coupler en translation la navette et le chariot.

8. Dispositif conforme à l'une des revendications 4 à 7, caractérisé en ce que les moyens (7) pour déplacer la navette jusqu'à une position prédéterminée comprennent un vérin électrique associé à un moteur pas à pas.

9. Dispositif conforme à l'une des revendications 4 à 8, caractérisé en ce qu'il comprend en outre, des moyens de couplage à frottement entre le banc et le chariot pour maintenir ce dernier dans une position fixe par rapport au banc après son installation par la navette dans une position prédéterminée.

10. Dispositif conforme à la revendication 9, caractérisé en ce que les moyens de couplage à frottement comprennent un deuxième électro-aimant (12) monté sur le chariot, le noyau (13) de l'électro-aimant étant mobile entre une position rétractée, permettant le déplacement du chariot par la navette, et une position débordante dans laquelle il porte sur une plage rugueuse du banc pour assurer le couplage à frottement.

11. Dispositif conforme à l'une quelconque des revendications 4 à 10, caractérisé en ce que les moyens de couplage et les moyens pour déplacer la navette sont pilotés par ordinateur.

12. Dispositif conforme à l'une quelconque des revendications 4 à 11, caractérisé en ce que les organes alignés sont des injecteurs de produit pulvérulent, en suspension dans un gaz, pour l'alimentation d'une buse de distribution disposée transversalement au sens de déplacement d'un substrat sous-jacent en défilement, en vue de la projection, sur ce substrat, de ce produit pour y former une couche.

13. Application du dispositif conforme à la revendication 12, à la projection de produit pulvérulent sur une feuille de verre.

## Patentansprüche

1. Verfahren zur Veränderung der Relativpositionen einer Anzahl von Elementen (1), die gemäß einer ersten Konfiguration ausgerichtet sind, insbesondre von Einspritzern für pulverförmige Teilchen, die in einer Verteilungsdüse ausgerichtet sind, zur Bildung einer Schicht auf einem darunter vorbeilaufenden Träger, in der Weise, daß sie in einer Reihe gemäß einer zweiten Konfiguration angeordnet werden, **dadurch gekennzeichnet,** daß:
a) mindestens eines der Elemente (1) an einen Wagen (5) gekopplet wird, der parallel zur Aufstellung der Elemente beweglich ist,
b) der Wagen (5) und das bzw.die Elemente (1), die mit ihm gekopplet sind, von einer Ausgangsposition bis zu einer vorbestimmten Position verschoben werden, und
c) der Wagen (5) von den Elementen (1) entkoppelt wird, nachdem es/sie in der vorbestimmten Position aufgestellt sind,
d) die Etappen a), b) und c) für alle zu verschiebenden Elemente (1) wiederholt werden.

2. Verfahren nach Anspruch 1, **dadurch gekennzeichnet,** daß die Kopplung von mindestens einem Bauteil an den Wagen (5) ebenso wie die Verschiebung des letzteren durch einen Computer gesteuert wird.

3. Verfahren nach einem der Ansprüche 1 oder 2, **dadurch gekennzeichnet,** daß der Wagen (5) um Einzelschritte verschoben wird.

4. Vorrichtung zur Änderung der Relativpositionen einer Anzahl von Elementen (1) die gemäß einer ersten Konfiguration ausgerichtet sind, in der Weise, daß sie in Reihe gemäß einer zweiten Konfiguration aufgestellt werden, **dadurch gekennzeichnet,** daß die Elemente (1) beweglich auf einer gemeinsamen Werkbank (3) angeordnet sind, und daß die Vorrichtung zumindest einen Wagen (5) aufweist, der parallel zur Aufstellung der Elemente beweglich ist, sowie Vorrichtungen zur selektiven Kopplung des Wagens mit mindestens einem der Elemente und eine Einrichtung (7) zur Verschiebung des Wagens und der bzw. den Elemente (n), die mit ihm gekoppelt sind, bis zu einer vorbestimmten Position.

5. Vorrichtung nach Anspruch 4, **dadurch gekennzeichnet,** daß die Elemente jeweils mit einem Schlitten (2) verbunden sind, der auf der Werkbank (3) beweglich montiert ist, die allen Schlitten (2) gemeinsam ist.

6. Vorrichtung nach Anspruch 5, **dadurch gekennzeichnet,** daß die Einrichtung zur selektiven Kopplung des Wagens mit mindestens einem der Schlitten einen Elektromagneten (10), der auf dem Schlitten (2) montiert ist, und einen Kern (11) des Elektromagneten umfaßt, der zwischen einer zurückgezogenen Position, die einer Entkopplung des Gleitwagens entspricht, und einer herausstehenden Position, die einer Kopplung des Gleitwagene entspricht, beweglich ist.

7. Vorrichtung nach Anspruch 6, **dadurch gekennzeichnet,** daß der Wagen (5) eine Platte (8) umfaßt, die parallel zur Bahn der Schlitten auf der Höhe des Elektromagneten (10) zur Kopplung des Schlittens an den Wagen angeordnet ist, und die mit einer Anzahl von Aufnahmen (9) versehen ist, die parallel zur Bahn des Schlittens ausgerichtet sind, und die selektiv mit dem Ende des Kerns (11) des Elektromagneten (10) zusammenwirken, um den Wagen und den Schlitten transversal zu koppeln.

8. Vorrichtung nach einem der Ansprüche 4 bis 7, **dadurch gekennzeichnet,** daß die Einrichtung (7) zur Verschiebung des Wagens bis zu einer vorbestimmten Position einen mit einem Schrittmotor elektrisch verbundenen Zylinder umfaßt.

9. Vorrichtung nach einem der Ansprüche 4 bis 8, **dadurch gekennzeichnet,** daß sie außerdem eine Vorrichtung zur Reibungskopplung zwischen der Werkbank und dem Schlitten umfaßt, um den letzteren in einer festen Position in Bezug zur Werkbank zu halten nachdem der Wagen in seine vorgesehene Position gebracht ist.

10. Vorrichtung nach Anspruch 9, **dadurch gekennzeichnet,** daß die Einrichtungen zur Reibungskopplung einen zweiten Elektromagneten (12), der auf dem Schlitten montiert ist, und einen Kern (13) des Elektromagneten umfaßt, der beweglich ist zwischen einer zurückgezogenen Position, die die Verschiebung des Schlittens durch den Gleitwagen erlaubt, und einer herausragenden Position, in welche er auf eine rauhe Fläche der Bank angreift, um die Reibungskopplung sicherzustellen.

11. Vorrichtung nach einem der Ansprüche 4 bis 10, **dadurch gekennzeichnet,** daß die Einrichtung zur Kopplung und die Einrichtungen zur Verschiebung des Wagens durch einen Computer gesteuert werden.

12. Vorrichtung nach einem der Ansprüche 4 bis 11, **dadurch gekennzeichnet,** daß die ausgerichteten Elemente Einspritzer für pulverförmige und sich im Suspension in einem Gas befindliche Teilchen zur Versorgung einer Verteilderdüse sind, die transversal zur Verschiebung eines darunter vorbeilaufenden Substrates angeordnet sind, zum Zwecke der Auftragung der Teilchen auf dieses Substrat, um dort eine Schicht zu bilden.

13. Anwendung der Vorrichtung nach Anspruch 12 zur Auftragung eines pulverförmigen Produktes auf ein Glasband.

## Claims

1. Method of modifying the relative positions of a plurality of members (1) aligned according to a first configuration, notably of injectors for pulverulent products aligned in a distribution nozzle for the purpose of forming a film on a support moving past beneath the nozzle, in such a way as to arrange them in a line according to a second configuration, characterized in that:
a) at least one of said members (1) is selectively coupled to a shuttle (5), movable parallel to the alignment of the members,
b) the shuttle (5) and the member or members (1) which are coupled to it are moved from an initial position to a predetermined position, and
c) the shuttle (5) is uncoupled from the member or members (1) after the member or members have been installed at the predetermined position,
d) steps a), b) and c) are repeated for all the members (1) to be moved.

2. Method according to Claim 1, characterized in that the coupling of at least one member to the shuttle (5) and also the displacing of this shuttle are governed by computer.

3. Method according to one of Claims 1 or 2, characterized in that the shuttle (5) is displaced by elementary steps.

4. Device for modifying the relative positions of a plurality of members (1) aligned according to a first configuration so as to arrange them in line according to a second configuration, characterized in that said members (1) are counted movable on a common bench (3) and in that it comprises at least one shuttle (5) movable parallel to the alignment of the members, means for selectively coupling the shuttle to at least one of said members and means (7) for displacing the shuttle and the member or members which are coupled to it to a predetermined position.

5. Device according to Claim 4, characterized in that the members are associated each with a carriage (2) mounted movable on the bench (3) common to all the carriages (2).

6. Device according to Claim 5, characterized in that the means for selectively coupling the shuttle to at least one of said carriages comprise an electromagnet (10) mounted on the carriage (2), the core (11) of the electromagnet being movable between a retracted position corresponding to a non-coupling to the shuttle and a projecting position corresponding to coupling to the shuttle.

7. Device according to Claim 6, characterized in that the shuttle (5) comprises a plate (8) which is disposed parallel to the track of the carriages at the level of the electromagnet (10) for coupling the carriage to the shuttle, and which is equipped with a plurality of seatings (9), which form an alignment parallel to the track of the carriage and which cooperate selectively with the end of the core (11) of the electromagnet (10) of a carriage for coupling the shuttle and the carriage together in translation.

8. Device according to one of Claims 4 to 7, characterized in that the means (7) for displacing the shuttle to a predetermined position comprise an electric jack associated with a stepping motor.

9. Device according to one of Claims 4 to 8, characterized in that it comprises, in addition, friction coupling means for coupling between the bench and the carriage for holding the carriage in a fixed position relative to the bench after it has been installed by the shuttle in a predetermined position.

10. Device according to Claim 9, characterized in that the friction coupling means comprise a second electromagnet (12) mounted on the carriage, the core (13) of the electromagnet being movable between a retracted position, allowing displacement of the carriage by the shuttle, and a projecting position, in which it bears against a rough face of the bench to assure the friction coupling.

11. Device according to any one of Claims 4 to 10, characterized in that the coupling means and the means for displacing the shuttle are controlled by computer.

12. Device according to any one of Claims 4 to 11, characterized in that the aligned members are injectors for pulverulent product in suspension in a gas, for supplying a distribution nozzle disposed transversely to the direction of travel of a substrate passing beneath, for the purpose of projecting this product onto this substrate to form a film thereon.

13. Application of the device according to Claim 12 to the projection of pulverulent product onto a glass sheet.
